# EUROPEAN PATENT APPLICATION

(11) **EP 1 953 741 A2**
(43) Date of publication of application: **06.08.2008**
(21) Application number: 08150910.1
(22) Date of filing: 31.01.2008
(51) Int. Cl.: G11B 5/48

(54) **Head stack assembly and hard disk drive with the same**

(30) Priority: 01.02.2007 KR 20070010654
(71) Applicant: Samsung Electronics Co., Ltd., Suwon-si, Gyeonggi-Do (KR)
(72) Inventor: Song, Yong-han, Yeongtong-gu,Suwon-si, Gyeonggi-do (KR); Kim, Woo-sung, Gangnam-gu, Seoul (KR)
(74) Representative: Grünecker, Kinkeldey, Stockmair & Schwanhäusser Anwaltssozietät

(57) **Abstract**

A head stack assembly (HSA) (120A,120B,120C) including: a swing arm (125A) comprising a core (126) pivotably coupled to a base (101) of a hard disk drive (HDD) (100) and at least one arm blade (127a,127b) extending horizontally from the core (126); a suspension (136a,136b) extending from a front end of the arm blade (127a,127b); a head slider (138a,138b) mounted on a front end of the suspension (136a,136b); a blade extension portion (128) provided at a side of the swing arm (125A) in a width direction of the swing arm (125A), the blade extension portion (128) being an extension of the arm blade (127a,127b) toward the core (126) to avoid interfering with a disk (110) of the HDD (100); and a rigidity weakening portion (130a,130b,131a,132a) provided at the other side of the swing arm (125A) in the width direction, the rigidity weakening portion (130a,130b,131a,132a) having a thickness less than that of the arm blade (127a,127b) so as to alleviate an inconsistency of the rigidity of the arm blade (127a,127b) in a width direction of the arm blade (127a,127b) caused by the blade extension portion (128).

## Description

### BACKGROUND OF THE INVENTION

### 1. Field of the Invention

The present invention relates to a hard disk drive (HDD), and more particularly, to a head stack assembly (HSA) that reduces the extent of vibration-induced "off tracking" and a hard disk drive employing the head stack assembly.

### 2. Description of the Related Art

A hard disk drive (HDD) is an example of an auxiliary memory device used in computers, MPEG layer 3 (MP3) players, mobile phones, etc. A hard disk drive employs a head slider (that is a data writing/reading medium) to either read and play back data recorded on a disk (that is a data recording medium) or write new data on the disk. During an operation of a hard disk drive, the head slider is maintained in a state floating at a predetermined distance from the disk, and a magnetic head formed on the head slider reads and plays back data stored on the disk or writes new data on the disk. A head stack assembly (HSA) is a device that has the head slider attached to and supported by the leading end of the HSA and moves at a predetermined location on a disk.

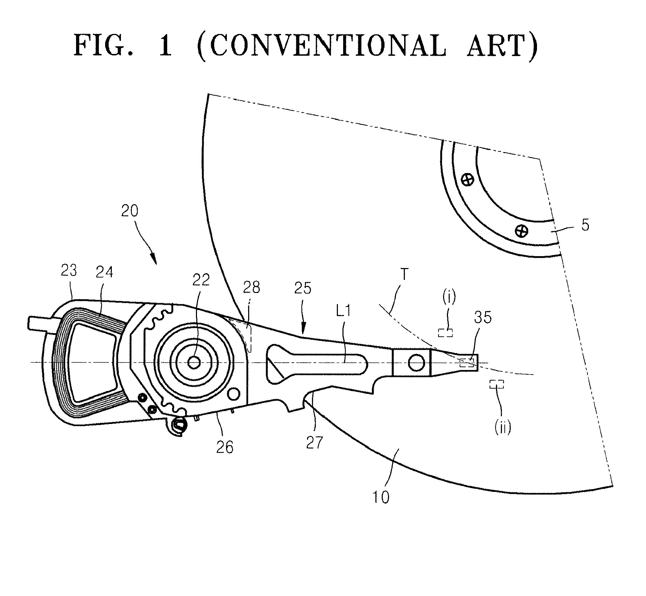

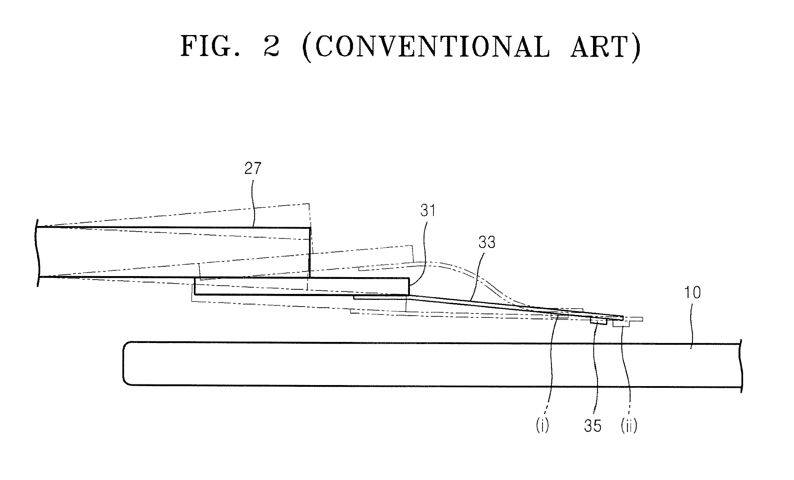

FIG. 1 is a plan view of a conventional HSA, and FIG. 2 is a side view of the HSA.

Referring to FIGS. 1 and 2, an HSA 20 includes a swing arm 25, the swing arm having a core 26 which has a pivot bearing 22 inserted therein and is pivotably coupled to a base (not shown) and an arm blade 27 extending horizontally from the core 26, a suspension 33 attached to the front end of the arm blade 27 with a coupling plate 31 interposed therebetween, and a head slider 35 mounted on the front end of the suspension 33. Also, the HSA 20 further includes an over mold 23 coupled to the core 26 and including a voice coil 24. In order to prevent the pivoting of the HSA 20 from being interfered by the disk 10, the arm blade 27 has a blade extension portion 28 expanded toward the core 26 provided on the swing arm 25. The head slider 35 mounted to the front end of the HSA 20 writes data on a certain track (T) of the rotating disk 10, or reads data recorded on the track (T) while suspending over the track (T).

The head slider 35 may deviate from a certain track (T) due to a disturbance from the outside or a vibration of the disk 10 or the head slider 35 caused by operations of the spindle motor 5 and the HSA 20. This phenomenon is called "off tracking". According to the vibration frequency applied to the hard disk drive, "off tracking" due to a vibration of the disk 10 is induced at certain frequencies and "off tracking" due to a vibration of the HSA 20 at other frequencies.

As shown in FIG. 2, "off tracking" caused by a vertical movement of the arm blade 27 of the HSA 20 can be referred to as "arm bending off tracking". When the arm blade 27 moves upward, the suspension 33 flexes so that the head slider 35 deviates from a normal position illustrated by a solid line to a position (i) illustrated by a broken line. On the other hand, when the arm blade 27 moves downward, the suspension 33 straightens so that the head slider 35 moves to a position (ii) illustrated by a broken line.

However, since the stiffness of the arm blade 27 is not symmetrical about the centerline L1 of the HSA 20 due to the blade extension portion 28, the arm blade 27 twists during its upward and downward movement. Thus, when the arm blade 27 moves upward, the head slider 35 deviates from the centerline L1 and moves to the position (i) illustrated by the broken line in FIG. 1. Conversely, when the arm blade 27 moves downward, the head slider 35 deviates from the centerline L1 and moves to the position (ii) illustrated by the broken line in FIG. 1. Accordingly, the head slider 35 is out of the track rather than fluctuating over the centerline L1.

### SUMMARY OF THE INVENTION

The object of the present invention is to provide a head stack assembly (HSA) that reduces the extent of "off tracking" due to arm bending and a hard disk drive employing the HSA.

This object is solved by the subject matter of the independent claims.

Preferred embodiments are defined in the dependent claims.

According to an aspect of the present invention, there is provided an HSA including: a swing arm comprising a core pivotably coupled to a base of a hard disk drive (HDD) and at least one arm blade extending horizontally from the core; a suspension extending from a front end of the arm blade; a head slider mounted on a front end of the suspension; a blade extension portion provided at a side of the swing arm in a width direction of the swing arm, the blade extension portion being an extension of the arm blade toward the core to avoid interfering with a disk of the HDD; and a rigidity weakening portion provided at the other side of the swing arm in the width direction, the rigidity weakening portion having a thickness less than that of the arm blade so as to alleviate an inconsistency of the rigidity of the arm blade in a width direction of the arm blade caused by the blade extension portion.

The rigidity weakening portion may be formed around a boundary between the core and the arm blade.

The swing arm may include a plurality of arm blades, and each arm blade may have a rigidity weakening portion.

The blade extension portion and the rigidity weakening portion may be disposed at opposite sides of an imaginary straight line that connects the head slider with a pivoting center of the HSA.

The rigidity weakening portion may be formed by partially removing one of an upper surface and a lower surface of the arm blade.

When the thickness of the rigidity weakening portion is Tw and the thickness of the arm blade is To, an equation 0.1 ≤ Tw/To<1 may be established.

The rigidity weakening portion may be formed in a region existing within a radius of 7 mm from a point that is located on a boundary line between the core and the arm blade and is farthest from the pivotal center of the disk.

### BRIEF DESCRIPTION OF THE DRAWINGS

The above and other features and advantages of the present invention will become more apparent by describing in detail exemplary embodiments thereof with reference to the attached drawings in which:
FIG. 1 is a plan view of a conventional HSA;
FIG. 2 is a side view of the HSA shown in FIG. 1;
FIG. 3 is a plan view of a hard disk drive according to a preferred embodiment of the present invention;
FIG. 4 is a side view of the HSA shown in FIG. 3;
FIGS. 5 and 6 are plan views of HSAs according to other preferred embodiments of the present invention;
FIGS. 7A, 7B, and 7C are graphs showing the relationships between the frequencies of vibrations applied to the HSA shown in FIGS. 1 and 2 and "off tracking" amounts; and
FIGS. 8A, 8B, and 8C are graphs illustrating the relationships between frequencies of vibrations applied to the HSA shown in FIGS. 3 and 4 and "off tracking" amounts.

### DETAILED DESCRIPTION OF THE INVENTION

The HSA according to the present invention and an HDD having the HSA will now be described more fully with reference to the accompanying drawings, in which exemplary embodiments of the invention are shown.

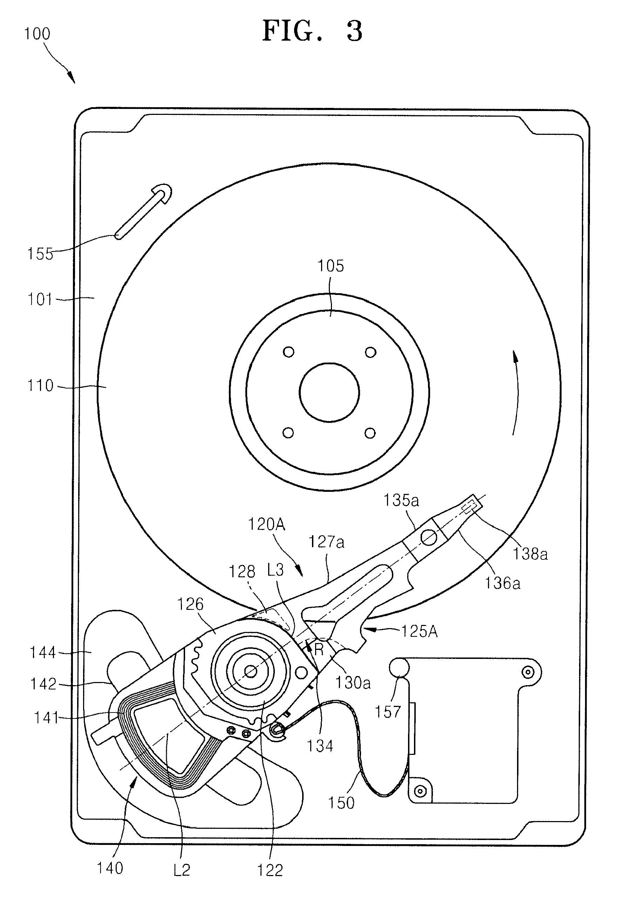

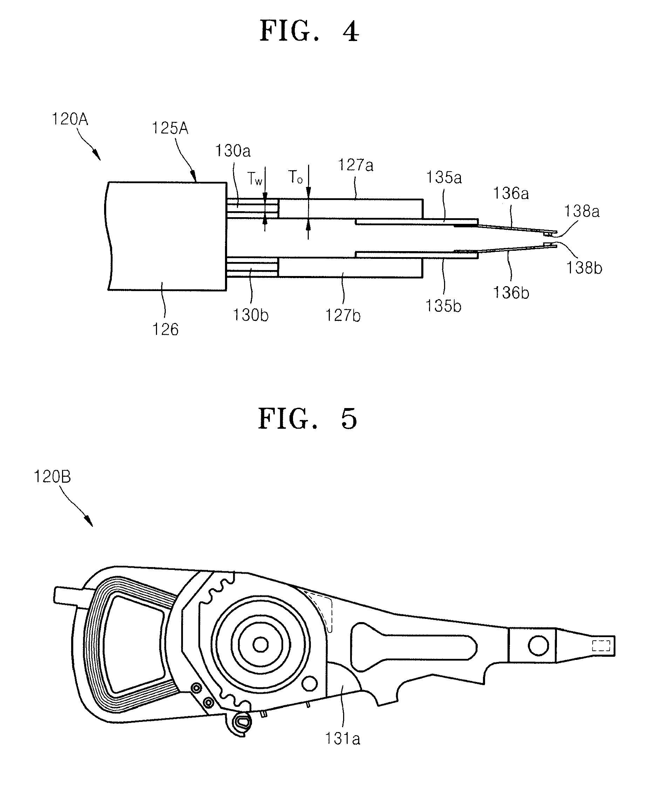

FIG. 3 is a plan view of a hard disk drive according to a preferred embodiment of the present invention, FIG. 4 is a side view of a head stack assembly (HSA) shown in FIG. 3, and FIGS. 5 and 6 are plan views of HSAs according to other preferred embodiments of the present invention.

Referring to FIGS. 3 and 4, the hard disk drive 100 is manufactured by including a spindle motor 105, a disk 110, which is a data recording medium, and an HSA 120A in a housing made up of a base 101 and a cover (not shown) coupled to the base 101. The spindle motor 105 rotates the disk 110 fast and is fixed to the base 101. The disk 110 is coupled to the spindle motor 105, and rotates at high speed in the direction indicated by the arrow (in FIG. 3). The high speed rotation induces an airflow in the same direction as the direction indicated by the arrow over the surface of the disk 110.

The HSA 120A includes head sliders 138a and 138b with magnetic heads (not shown) formed thereon to perform writing or reading of data. The head sliders 138a and 138b move along tracks on the disk 110 to write data on the disk 110 or read recorded data from the disk 110. The HSA 120A includes a swing arm 125A, suspensions 136a and 136b coupled to the front end of the swing arm 125A via coupling plates 135a and 135b, respectively, and head sliders 138a and 138b mounted respectively on the front ends of the suspensions 136a and 136b. The HSA 120A further includes an overmold 140 that is coupled to the swing arm 125A and includes a voice coil 141.

A magnet 142 and a yoke 144 supporting the magnet 142 are disposed above and below the overmold 140. The magnet 142, the yoke 144, and the voice coil 141 of the HSA 120A form a voice coil motor that provides a driving force for pivoting the HSA 120A.

While the airflow induced by the high speed rotation of the disk 110 is passing between the surface of the disk 110 and the disk facing surfaces of the head sliders 138a and 138b, a lift force is applied to the head sliders 138a and 138b over the surface of the disk 110. The head sliders 138a and 138b are maintained to float at a height where an equilibrium between the lift force and the tensile force of the suspensions 136a and 136b pressing the head sliders 138a and 138b toward the disk 110 is established. In this floating state, the magnetic heads (not shown) formed on the head sliders 138a and 138b perform writing/reading of data on the disk 110.

The hard disk drive 100 further includes a flexible printed circuit (FPC) 150 that electrically connects the HSA 120A and a main circuit board (not shown) disposed at the bottom of the base 101, and a circulation filter 155 that removes foreign materials, such as particles, contained in the air that circulates within the hard disk drive 100. The hard disk drive 100 further includes a crash stopper 157 which restricts the clockwise over-rotation of the HSA 120A.

The swing arm 125A of the HSA 120A includes a core 126 which has a pivot bearing 122 inserted therein and is pivotably coupled to the base 101, and a pair of arm blades 127a and 127b extending in a horizontal direction from the core 126. The coupling plates 135a and 135b are coupled through swaging to the leading ends of the arm blades 127a and 127b, and the suspensions 136a and 136b are respectively attached to the coupling plate 135a and 135b.

In order to avoid interfering with the disk 110, the swing arm 125A has blade extension portions 128 which are extensions of the arm blades 127a and 127b toward the core 126. The blade extension portion 128 corresponding to an extension of the arm blade 127b is not shown in FIG. 3. The blade extension portions 128 are provided at a side of an imaginary centerline L2 that is closer to the spindle motor 105. Here, the imaginary centerline L2 connects the center of the pivot bearing 122, which is the pivoting center of the HSA 120A, with the head sliders 138a and 138b. The blade extension portions 128 prevent the pivoting of the HSA 120A from being interfered with the disk 110.

The arm blades 127a and 127b include rigidity weakening portions 130a and 130b, respectively, which alleviate inconsistencies in the rigidities of the arm blades 127a and 127b in the width directions thereof. Each of the rigidity weakening portions 130a and 130b has a thickness (Tw) smaller than a thickness (To) of each of the arm blades 127a and 127b. The swing arm 125A is formed of aluminum or an aluminum alloy. Each of the rigidity weakening portions 130a and 130b is formed by partially cutting away the top and bottom surfaces of each of the arm blades 127a and 127b through micro-machining. In contrast with the embodiment depicted in FIG. 4, each of the rigidity weakening portions 130a and 130b may be formed by partially cutting away only one of the upper and lower surfaces of each of the arm blades 127a and 127b so as to have a recess.

The rigidity weakening portions 130a and 130b are provided on the other side of the centerline L2, which is opposite to the side where the blade extension portions 128 are formed. The rigidity weakening portions 130a and 130b may be formed around the boundaries between the core 126 and the arm blades 127a and 127b. Specifically, the rigidity weakening portions 130a and 130b are formed in a region existing within a radius R of 7mm from a point 134 that is located on a boundary L3 between the core 126 and the arm blades 127a and 127b and is farthest from the spindle motor 105, which is the pivotal center of the disk 110. Moreover, when the thickness of each of the rigidity weakening portions 130a and 130b is Tw and the thickness of each of the arm blades 127a and 127b is To, this equation 0.1 ≤ Tw/To

### < 1 is established.

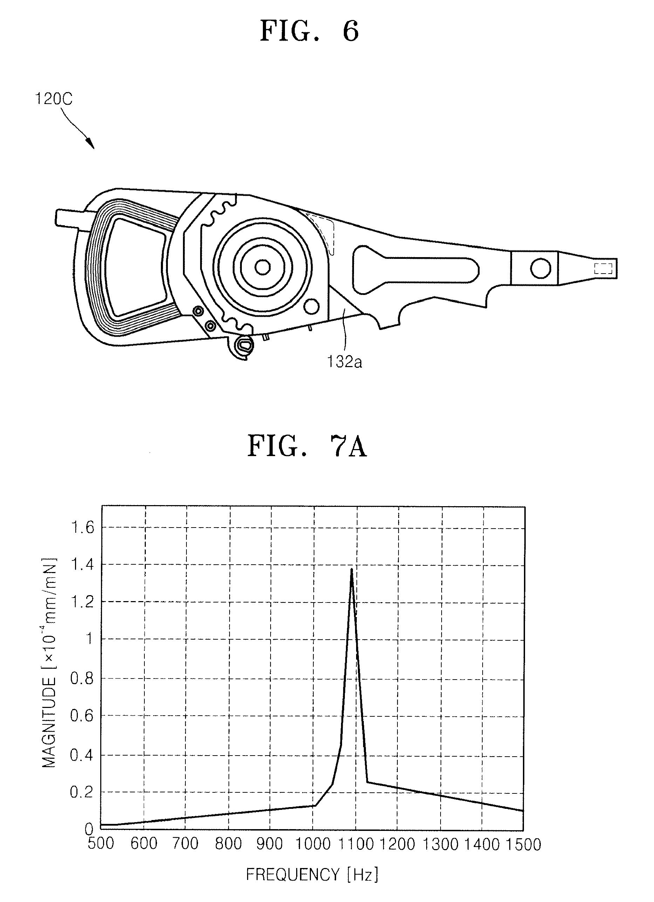

The rigidity weakening portions 130a and 130b depicted in FIGS. 3 and 4 are recessed in approximately rectangular shapes; however, an HSA of the present invention may have rigidity weakening portions formed in the other shapes. That is, the HSA according to the present invention may be an HSA 120B having a fan-shaped rigidity weakening portion 131 a illustrated in FIG. 5 or may be an HSA 120C having a triangular rigidity weakening portion 132a illustrated in FIG. 6.

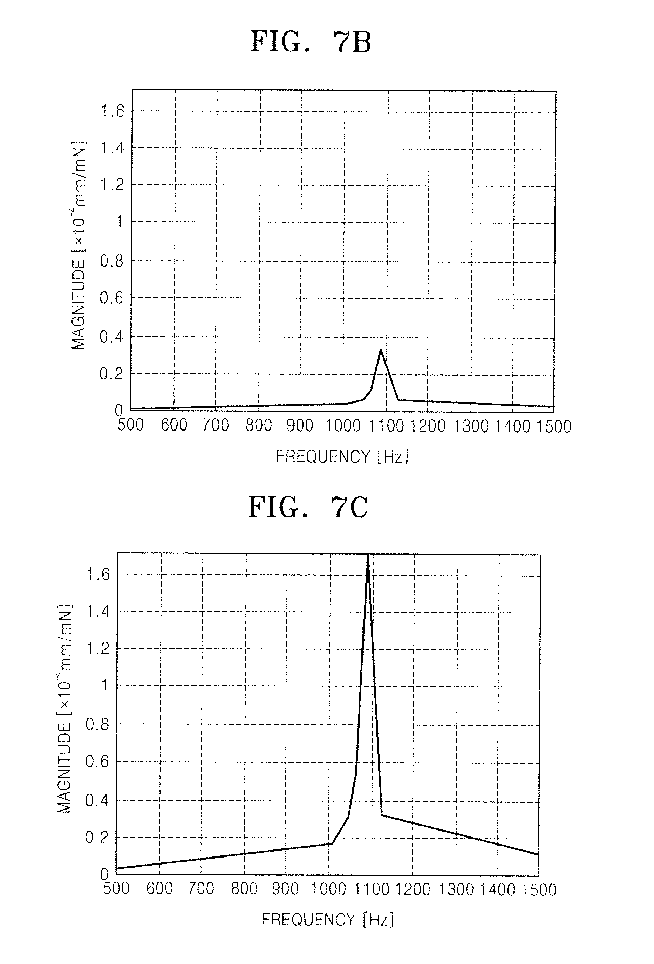

To inspect the effects of the present invention, a computer simulation was performed to compare the conventional HSA 20 in FIGS. 1 and 2 with the HSA 120A of the present invention in FIGS. 3 and 4 in terms of the amount of "off tracking" due to arm bending. FIGS. 7A, 7B, and 7C are graphs showing the results of the simulation with respect to the conventional HSA 20 in FIGS. 1 and 2, and FIGS. 8A, 8B, and 8C are graphs showing the result of the simulation with respect to the HSA 120A according to the embodiment of the present invention shown in FIGS. 3 and 4.

In detail, FIG. 7A illustrates the amount of "off tracking" (hereinafter called "U_{skew}") of the head slider 35 due to a movement thereof along the centerline L1 caused when arm bending occurs in the HSA 20. FIG. 7B illustrates the amount of "off tracking" (hereinafter called "U_{asym}") of the head slider 35 due to a movement thereof in a direction normal to the centerline L1 caused when arm bending occurs in the HSA 20. FIG. 7C illustrates a sum (hereinafter called "U_{y}") of the amounts of "off tracking" in FIGS. 7A and 7B.

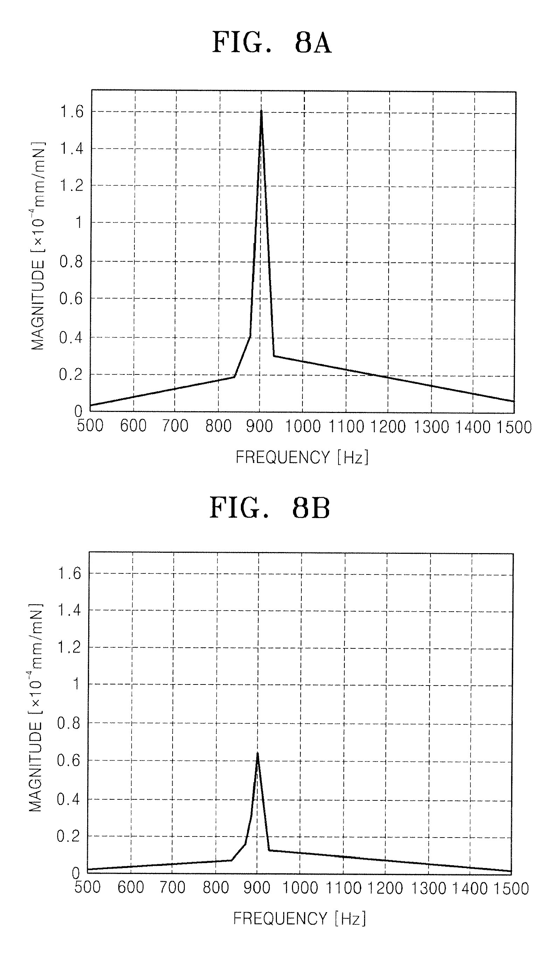

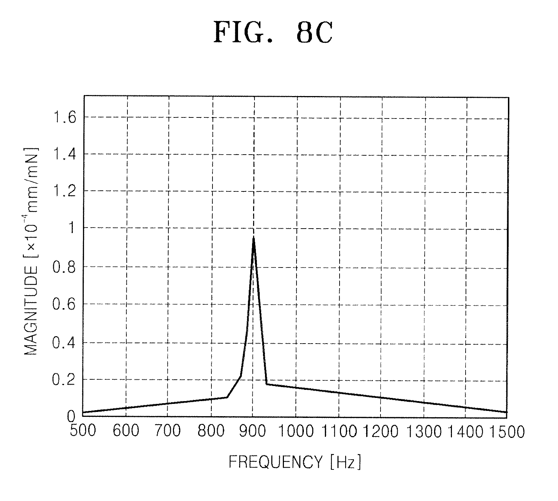

FIG. 8A illustrates a U_{skew} of the HSA 120A according to the embodiment of the present invention shown in FIGS. 3 and 4. FIG. 8B illustrates a U_{asym} of the HSA 120A, and FIG. 8C illustrates a U_{y} of the HSA 120A.

In the computer simulation, the thickness of the arm blade 27 of the conventional HSA 20 and the thickness To of each of the arm blades 127a and 127b of the HSA 120A were 1.1 mm, the thickness Tw of each of the rigidity weakening portions 130a and 130b of the HSA 120A was 0.53mm, and the area of the weakening portions 130a and 130b was 4.4×4.5mm². The horizontal axis of the graphs represents the frequency (in hertz) of a vibration applied to a hard disk drive, and the vertical axis thereof represents the amount of "off tracking" expressed in the unit of ×10⁻⁴mm/mN. As the conventional HSA 20 and the HSA 120A according to the present invention respectively employ a pair of head sliders (35,138a,138b), the computer simulation shows the same result for each head slider in a pair.

Referring to FIGS. 7A, 7B, and 7C, "off tracking" due to arm bending of the conventional HSA 20 occurs at a vibration with a frequency of around 1010-1130 Hz, and the U_{skew} and the U_{asym} are simply summed to produce a U_{y} that is greater than U_{skew}. Conversely, referring to FIGS. 8A, 8B, and 8C, "off tracking" due to arm bending of the HSA 120A according to the embodiment of the present invention shown in FIGS. 3 and 4 occurs at a vibration with a frequency of around 850-930 Hz. While the U_{skew} and the U_{asym} are respectively greater than those of the conventional HSA 20, the U_{y} of the HSA 120A is a value obtained by subtracting the U_{asym} from the U_{skew} Therefore, the HSA 120A is 44% less than that of the conventional HSA 20.

The reduction in "off tracking" illustrated in FIGS. 7A, 7B, 7C, and 8A, 8B, and 8C are depicted in table 1 below.

**Table 1**

| | U_{skew} [mm/mN] | U_{asym} [mm/mN] | U_{Y} [mm/mN] | Difference [%] |
|---|---|---|---|---|
| Conventional HSA head slider | 1.37E-4 | 3.23E-5 | 1.70E-4 | |
| HSA Head slider according to the present invention | 1.60E-4 | 6.51 E-5 | 9.5E-5 | -44% |

In a hard disk drive employing an HSA according to the present invention, "off tracking" is reduced due to arm bending, so that positioning error signal (PES) characteristics improve. Therefore, an improvement in a data processing speed can be anticipated. Moreover, the hard disk drive can use a highly integrated disk by increasing the number of tracks per inch (TPI).

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. An HSA (head stack assembly) (120A,1208,120C) comprising:
a swing arm (125A) comprising a core (126) pivotably coupled to a base (101) of an HDD (hard disk drive) (100) and at least one arm blade (127a, 127b) extending horizontally from the core (126);
a suspension (136a, 136b) extending from a front end of the arm blade (127a, 127b);
a head slider (138a,138b) mounted on a front end of the suspension (136a, 136b);
a blade extension portion (128) provided at a side of the swing arm (125A) in a width direction of the swing arm (125A), the blade extension portion (128) being an extension of the arm blade (127a,127b) toward the core (126) to avoid interfering with a disk (110) of the HDD (100); and
a rigidity weakening portion (130a, 130b, 131a, 132a) provided at the other side of the swing arm (125A) in the width direction, the rigidity weakening portion (130a, 130b, 131a, 132a) having a thickness less than that of the arm blade (127a,127b) so as to alleviate an inconsistency of the rigidity of the arm blade (127a,127b) in a width direction of the arm blade (127a,127b) caused by the blade extension portion (128).

2. The HSA of claim 1, wherein the rigidity weakening portion (130a,130b,131a,132a) is formed around a boundary (L3) between the core (126) and the arm blade (127a,127b).

3. The HSA of claim 1 or 2, wherein the swing arm (125A) includes a plurality of arm blades (127a,127b), and each arm blade (127a,127b) has a rigidity weakening portion (130a,130b,131 a,132a).

4. The HSA of any preceding claim, wherein the blade extension portions (128) and the rigidity weakening portions (130a,130b,131 a,132a) are disposed at opposite sides of an imaginary centerline (L2) that connects the head slider (138a,138b) with a pivoting center of the HSA.

5. The HSA of any preceding claim, wherein the rigidity weakening portions (130a, 130b, 131a,132a) are formed by partially removing one of an upper surface and a lower surface of the arm blade (127a,127b).

6. The HSA of any preceding claim, wherein when the thickness of the rigidity weakening portion (130a, 130b, 131 a, 132a) is Tw and the thickness of the arm blade (127a,127b) is To, an equation 0.1 ≤ Tw/To<1 is established.

7. The HSA of any preceding claim, wherein the rigidity weakening portion (130a,130b,131a,132a) is formed in a region existing within a radius (R) of 7 mm from a point (134) that is located on a boundary line (L3) between the core (126) and the arm blade (127a,127b) and is farthest from the pivotal center of the disk (110).

8. An HDD (hard disk drive) (100) comprising a base (101), a disk (110) that is a data recording medium that rotates on the base (101) at high speed, and an HSA (head stack assembly) (120A,120B,120C) pivotably instated on the base (101), wherein the HSA comprises:
a swing arm (125A) including a core (126) pivotably coupled to the base (101) and at least one arm blade (127a, 127b) extending horizontally from the core (126);
a suspension (136a, 136b) extending from a front end of the arm blade (127a,127b);
a head slider (138a,138b) mounted at a front end portion of the suspension (136a,136b);
a blade extension portion (128) provided at a side of the swing arm (125A) in a width direction of the swing arm (125A), the blade extension portion (128) being an extension of the arm blade (127a,127b) toward the core (126) to avoid interfering with the disk (110); and
a rigidity weakening portion (130a,130b,131 a,132a) provided at the other side of the swing arm (125A) in the width direction of the swing arm (125A), the rigidity weakening portion (130a,130b,131 a,132a) having a thickness less than that of the arm blade (127a,127b) so as to alleviate an inconsistency of the rigidity of the arm blade (127a,127b) in a width direction of the arm blade (127a, 127b) caused by the blade extension portion (128).

9. The HDD of claim 8, wherein the rigidity weakening portion (130a, 130b, 131a, 132a) is formed around a boundary (L3) between the core (126) and the arm blade (127a,127b).

10. The HDD of claim 8 or 9, wherein the swing arm (125A) includes a plurality of arm blades (127a,127b), and each arm blade (127a,127b) has a rigidity weakening portion (130a,130b,131 a,132a).

11. The HDD according to any of claims 8 to 10, wherein the blade extension portions (128) and the rigidity weakening portions (130a, 130b, 131a,132a) are disposed at opposite sides of an imaginary centerline (L2) that connects the head slider (138a,138b) with a pivoting center of the HSA.

12. The HDD according to any of claims 8 to 11, wherein the rigidity weakening portions (130a, 130b, 131a, 132a) are formed by partially removing one of an upper surface and a lower surface of the arm blade (127a,127b).

13. The HDD according to any of claims 8 to 12, wherein when the thickness of the rigidity weakening portion (130a, 130b, 131a, 132a) is Tw and the thickness of the arm blade (127a,127b) is To, an equation 0.1 ≤ Tw/To<1 is established.

14. The HDD according to any of claims 8 to 13, wherein the rigidity weakening portion (130a, 130b, 131a, 132a) is formed in a region existing within a radius (R) of 7 mm from a point (134) that is located on a boundary line (L3) between the core (126) and the arm blade (127a,127b) and is farthest from the pivotal center of the disk (110).
